Europäisches Patentamt

European Patent Office

Office européen des brevets

(11) Veröffentlichungsnummer: **0 237 614 B1**

(12) # EUROPÄISCHE PATENTSCHRIFT

(45) Veröffentlichungstag der Patentschrift: **27.02.91**

(51) Int. Cl.⁵· **G01B 5/00**

(21) Anmeldenummer: **86112592.0**

(22) Anmeldetag: **11.09.86**

(54) **Messtaster.**

(30) Priorität: **19.03.86 DE 3609283**

(43) Veröffentlichungstag der Anmeldung:
**23.09.87 Patentblatt 87/39**

(45) Bekanntmachung des Hinweises auf die
Patenterteilung:
**27.02.91 Patentblatt 91/09**

(84) Benannte Vertragsstaaten:
**AT BE CH DE FR GB IT LI LU NL SE**

(56) Entgegenhaltungen:
**DE-A- 2 332 519
DE-A- 3 234 470
US-A- 2 253 803
US-A- 3 946 492
US-A- 4 330 942**

(73) Patentinhaber: **Erowa AG
Winkelstrasse 8
CH-5734 Reinach(CH)**

(72) Erfinder: **Schneider, Rudolf
Gondiswinkel
CH-5734 Reinach(DE)**

(74) Vertreter: **Rottmann, Maximilian R.
c/o Rottmann + Quehl AG Glattalstrasse 37
CH-8052 Zürich(CH)**

**Beschreibung**

Die vorliegende Erfindung betrifft einen Messtaster zur Ermittlung der Dimensionen eines Werkstückes mit Hilfe einer mit dem Messtaster gekoppelten Messvorrichtung, insbesondere zur Bestimmung von zwei in rechtem Winkel zueinander stehenden, linearen Dimensionen eines Werkstückes mit derselben Messvorrichtung.

Zur Bestimmung linearer Dimensionen im Mikrometer- bzw. Millimeterbereich werden Messvorrichtungen verwendet, die innerhalb eines beschränkten Messbereiches sehr genau arbeiten, z.B. mechanische Messuhren, elektronische Wegaufnehmer und dgl. Insbesondere zur Bestimmung von Dimensionsabweichungen gegenüber einer vorgegebenen Standarddimension, zur Ermittlung der Rundlaufgenauigkeit von rotierbaren Werkstücken oder zur Bestimmung der Lage eines Werkstückes gegenüber einer Referenzlage haben sich diese Messvorrichtungen bestens bewährt. In vielen Fällen kann aber der Fühler der Messvorrichtung nicht direkt mit dem zu vermessenden Objekt in Wirkungsverbindung gebracht werden; es ist deshalb ein Messtaster erforderlich, der die Koppelung zwischen Objekt und Messfühler der Messvorrichtung herstellt.

Allgemein bekannte Messtaster arbeiten unidirektional linear, d.h., eine lineare Dimensionsänderung in einer vorgegebenen Richtung (und nur in dieser Richtung) wird proportional in eine Anzeige der Messvorrichtung umgesetzt. Um also die Dimensionen, die Dimensionsabweichungen oder eine Dimensionsänderung eines Werkstückes in zwei verschiedenen Richtungen zu messen, musste daher entweder die verwendete Messvorrichtung inklusive Messtaster umgebaut und neu justiert werden, oder es waren zwei unabhängig voneinander arbeitende Messvorrichtungen erforderlich. Dies hat sich in einem Mehraufwand an Arbeitszeit und/oder finanzieller Investition niedergeschlagen.

In der DE-OS 32 34 470 ist ein Lösungsweg gezeigt, mittels eines einzigen, eindimensionalen Weggebers eine Verschiebung eines Taststiftes in Achsrichtung wie auch eine Verschiebung desselben in einer zur Achse senkrechten Ebene zu erfassen. Jene Konstruktion verwendet dazu ein vergleichsweise kompliziertes System aus Hebelgelenken, Kugellinearführungen und Kugel-Konus-Flächen, um die Verschiebung des Taststiftes in den drei räumlichen Koordinaten in eine Linearbewegung (des Messfühlers) umzuwandeln; wenn dies mit der erforderlichen Genauigkeit funktionieren soll, muss bei der Herstellung und Bearbeitung all dieser Führungs-Einzelteile ein beträchtlicher Aufwand betrieben werden. Dies macht aber diese Vorrichtung teuer und störanfällig.

Es ist die Aufgabe der vorliegenden Erfindung, diese Nachteile zu vermeiden und einen einfach und robust aufgebauten Messtaster zu schaffen, mit dessen Hilfe mittels einer einzigen Messvorrichtung lineare Dimensionen gleichzeitig in zwei senkrecht zueinander stehenden Richtungen mit höchster Präzision gemessen bzw. ermittelt werden können.

Erfindungsgemäss wird dies durch die Ausbildung eines Meßtasters gemäß Auspruch 1 oder 2 erreicht.

Autgrund einer derartigen Ausbildung resultiert eine Messkraft-Einwirkung auf den Tastkopf in einer beliebigen Richtung in einer stets gleichen bzw. exakt entgegengesetzten, linearen Verschiebung des Tastkopfes in zwei. zueinander senkrechten Richtungen, so dass mit einer einzigen Messuhr oder sonstigen Messvorrichtung, deren Messfühler an einer beliebigen Fläche des Tastkopfes angreifen kann, eine Dimensionsänderung z.B. sowohl in horizontaler als auch in vertikaler Richtung gemessen werden kann, ohne dass der Messaufbau geändert werden müsste.

Bevorzugte Ausführungsformen und Weiterbildungen des Erfindungsgegenstandes sind in den abhängigen Ansprüchen 3 bis 5 umschrieben.

Im folgenden wird ein Ausführungsbeispiel des Erfindungsgegenstandes, unter Bezugnahme auf die beiliegenden Zeichnungen, näher beschrieben. In den Zeichnungen zeigen:

Fig. 1    eine schematische Seitenansicht des Messtasters im Ruhezustand,

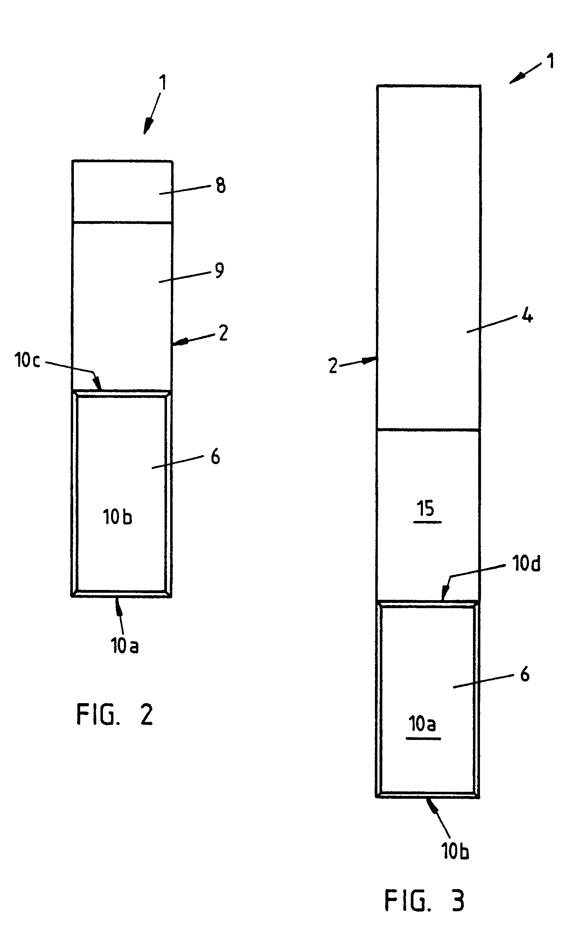

Fig. 2    eine Ansicht des Messtasters nach Fig. 1 von vorne, in Richtung des Pfeiles A,

Fig. 3    eine Ansicht des Messtasters nach Fig. 1 von unten, in Richtung des Pfeiles B,

Fig. 4    eine schematische Seitenansicht des Messtasters bei Wirkung einer Kraft $P_1$ bzw. $P_2$ auf den Tastkopf, und

Fig. 5    eine schematische Seitenansicht des Messtasters bei Wirkung einer Kraft $P_3$ bzw. $P_4$ auf den Tastkopf.

Der generell mit 1 bezeichnete Messtaster besitzt im Beispielsfall einen Tastkörper 2, der in einen ersten Bereich 3 und einen zweiten Bereich 4 unterteilt ist. Diese beiden Bereich 3 und 4 sind gegeneinander beweglich bzw. verschiebbar, wie im folgenden noch erklärt werden wird.

Der zweite Bereich 4 ist gegenüber einem auszumessenden Werkstück starr bzw. definiert verschiebbar und arretierbar befestigt; zu diesem Zweck können zwei Befestigungsbohrungen 5 vorgesehen sein, mit deren Hilfe der Messtaster-Bereich 4 an einer geeigneten, gegebenenfalls verstellbaren Haltevorrichtung (nicht dargestellt) einer Messapparatur verankert ist.

Der erste Bereich 3 ist mit dem zweiten Bereich 4 beweglich verbunden und trägt einen Tastkopf 6, der im Beispielsfall mittels einer Schraube 7 starr an einem Fortsatz 9 des ersten Bereichs 3 des Tastkörpers 2 befestigt ist. Der Tastkopf 6 ist durch einen kubischen Körper gebildet, welcher vier Messflächen 10a - 10d aufweist. Diese Messflächen sind plan bearbeitet und verlaufen zu den jeweils benachbarten Messflächen unter einem Winkel von exakt 90°. Je nach Anwendungsfall sind mindestens zwei benachbarte Messflächen (z.B. 10a und 10b) freiliegend; im vorliegenden Beispiel ist ausserdem die Messfläche 10c teilweise und die Messfläche 10d weitgehend ebenfalls freiliegend, d.h. von einer Messkraft beaufschlagbar.

Die bewegliche Koppelung des ersten Bereiches 3 mit dem zweiten Bereich 4 des Tastkörpers 2 erfolgt über elastisch verformbare Verbindungsglieder, die gegenüber den Messrichtungen, d.h. gegenüber den Messflächen 10a - 10d, in einem Winkel von 45° verlaufen. Im Beispielsfall sind zwei Verbindungsglieder 11 und 12 vorgesehen, die Teile des Tastkörpers 2 sind, welcher an sich einstückig ausgebildet ist, d.h. die Bereiche 3 und 4 des Tast körpers 2 bestehen aus ein und demselben Körper. Die Unterteilung in die zwei Bereiche 3 und 4 erfolgt dadurch, dass mehrere Schlitze 13a - 13c sowie 14 vorgesehen sind, die die beiden Bereiche 3 und 4 voneinander trennen.

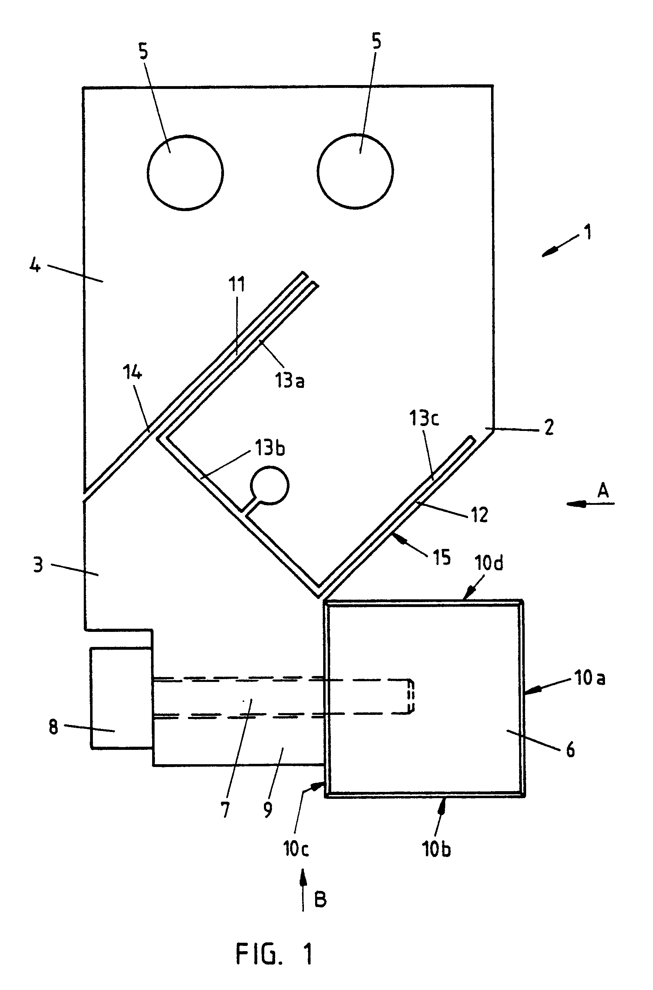

Aus der Fig. 1 ist klar ersichtlich, dass der Tastkörper 2 eine unter einem Winkel von 45° zu den Messflächen 10a - 10d verlaufende Seitenfläche 15 aufweist; durch diese Ausbildung ergibt sich der freie Zugang zur Messfläche 10d. Parallel zu dieser Seitenfläche 15, also ebenfalls unter einem Winkel von 45°, erstreckt sich in geringem Abstand der Schlitz 13c, und zwar derart, dass ein erstes Verbindungsglied 12 gebildet ist; dieses ist der verbleibende Materialsteg im Tastkörper 2, welcher den ersten Bereich 3 mit dem zweiten Bereich 4 verbindet.

Der Schlitz 13c setzt sich über einen rechtwinklig dazu verlaufenden Schlitz 13b (der seinerseits wiederum in einem Winkel von 45° zu den Messflächen 10a - 10d verläuft) in einen Schlitz 13a fort, der mit dem letzgenannten Schlitz 13b einen rechten Winkel einschliesst und damit zum Schlitz 13c parallel verläuft, jedoch in gewissem Abstand dazu. Parallel zu jenem Schlitz 13a, in geringem Abstand, ist schliesslich ein sich bis an den Rand des Tastkörpers 2 erstreckender Schlitz 14 vorgesehen, sodass zwischen diesem und dem Schlitz 13a ein Materialsteg verbleibt, der das andere Verbindungsglied 11 bildet.

Wesentlich ist, wie nachfolgend noch erläutert werden wird, dass die als Verbindungsglieder dienenden Stege 11 und 12 exakt unter einem Winkel von 45° zu den Messflächen 10a - 10d verlaufen.

Andererseits ist es aber nicht von ausschlaggebender Bedeutung, dass die Verbindungsglieder 11 und 12 einstückige Teile des Tastkörpers 2 sind; ebensogut ist es möglich, die Bereiche 3 und 4 des Tastkörpers 2 als unabhängige Einzelteile auszubilden und diese mit zwei Blattfedern (nicht dargestellt) miteinander zu verbinden. Diese übernehmen dann die Aufgabe der Stege 11 und 12, wobei aber darauf zu achten ist, dass der Längsverlauf der Blattfedern, in unbelastetem Zustand, unter einem Winkel von 45° zu den Messflächen 10a - 10d erfolgt.

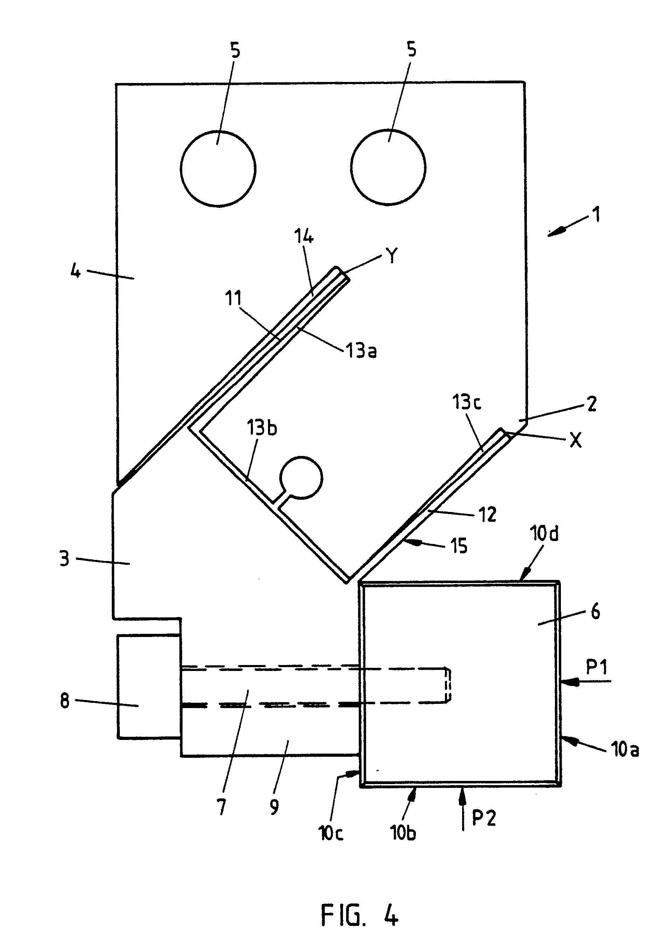

Wenn nun (gemäss Fig. 4) eine Kraft in Richtung des Pfeiles $P_1$ auf die Messfläche 10a einwirkt, hat diese grundsätzlich das Bestreben, sich linear ebenfalls in Richtung des Pfeiles $P_1$ zu verschieben. Da der erste Bereich 3 des Tastkörpers 2 und damit der Tastkopf 6 schwenkbar am zweiten, starren Bereich 4 des Tastkörpers gelagert sind, wird der Tastkopf 6 zu einer Bewegung in Richtung des Pfeiles $P_1$ und gleichzeitig in Richtung des Pfeiles $P_2$ veranlasst. Dies darum, weil der erste, bewegliche Bereich 3 über die beiden Stege 11 und 12, die unter einem Winkel von 45° zur Messrichtung verlaufen, mit dem zweiten, starren Bereich 4 verbunden ist. An deren Uebergang zum Tastkörper-Bereich 4, d.h. an den Punkten X und Y (Fig.4) bilden sich dadurch eine Art Schwenkachsen, um welche sich der verschiebbare Bereich 3 bewegt.

In der Fig.4 ist die maximal mögliche Verschiebestellung des Tastkopfes 6 unter Wirkung einer Kraft $P_1$ dargestellt. Man sieht, dass sich das linksseitige Ende der Schlitze 14 und 13c geschlossen hat, währenddem das linksseitige Ende des Schlitzes 13a bezüglich der Breite zugenommen hat. Durch das Anstossen der linksseitigen Enden der beiden Stege 11 und 12 an die benachbarten Tastkörper-Wände ist ein Anschlag geschaffen, der einer weiteren Bewegung des Bereichs 3 entgegenwirkt.

In der Praxis beträgt der maximale Verschiebungsweg des Tastkopfes 6 gegenüber dem starren Bereich 4 des Tastkörpers 2 Bruchteile eines Millimeters, da ein Messtaster gemäss der Erfindung im allgemeinen für auf eine Referenzlage bezogene Präzisionsmessungen eines Werkstükkes und nicht für die absolute Massbestimmung verwendet wird. Deshalb ist auch die theoretisch vorhandene Ungenauigkeit bei der Verformung der Stege 11 und 12 völlig unbedeutend, da der Verschiebeweg sehr klein ist.

Genau das gleiche passiert, wenn man eine Messkraft in Richtung des Pfeiles $P_2$ auf die Messfläche 10b wirken lässt. Obwohl der Tastkopf 6 theoretisch in der Richtung der Messkraft auszuweichen bestrebt ist, wird er, wie vorstehend erwähnt, zu einer Diagonalbewegung zwischen den Pfeilen P₁ und P₂ gezwungen. Dadurch ist aber erreicht, dass mit einer einzigen Messvorrichtung, z.B. einer Messuhr, eine Verschiebung des Tastkopfes 6 in zwei senkrecht zueinander stehenden Richtungen (z.B. in Richtung des Pfeiles P₁ und in Richtung des Pfeiles P₂) er mittelt werden kann.

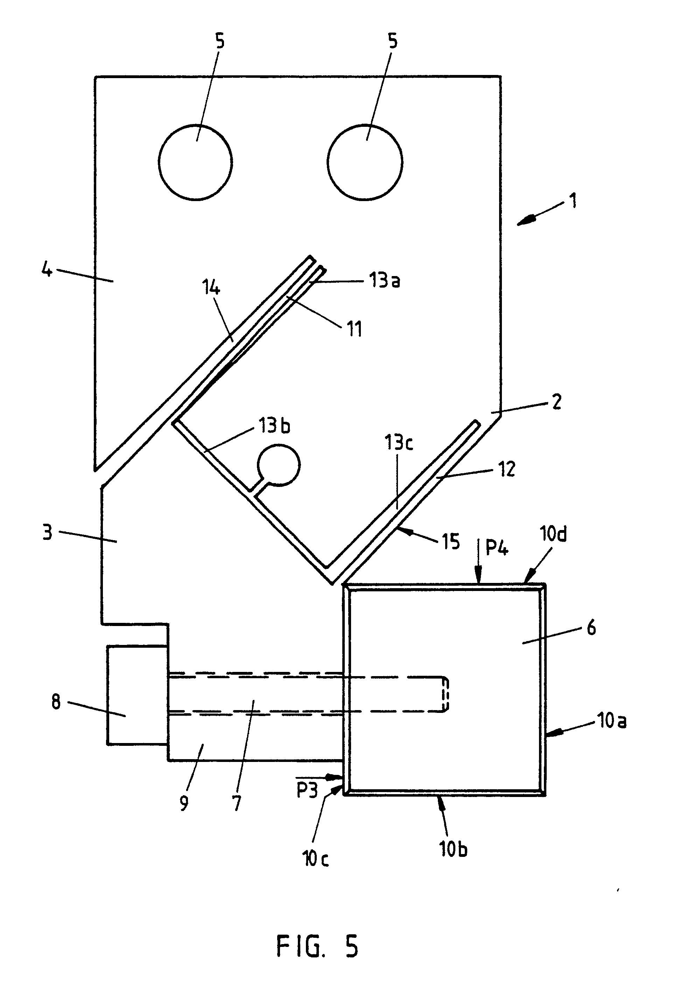

Kinematisch genau umgekehrte Verhältnisse sind vorhanden, wenn der Messtaster mit einer Messkraft in Richtung des Pfeiles P₃ bzw. in Richtung des Pfeiles P₄ beaufschlagt wird; eine solche Situation ist in Fig. 5 dargestellt, ebenfalls wieder mit maximaler Auslenkung des beweglichen Bereiches 3 gegenüber dem starren Bereich 4 des Tastkörpers 2. Auch hier wird sowohl eine Kraft in Richtung des Pfeiles P₃ als auch eine Kraft in Richtung des Pfeiles P₄ eine identische Verschiebung des Tastkopfes 6 bewirken, die mittels z.B. einer Messuhr bestimmt werden kann. Der einzige Unterschied besteht darin, dass die Verschiebung im Vergleich zu Fig. 4 in entgegengesetzten Richtungen erfolgt.

Die Lage des Angriffspunktes der Messvorrichtung am Messtaster 1, z.B. die Auflage des Messfühlers einer Messuhr, ist an sich unkritisch, solange es sich dabei um eine exakt plane und zu den Messrichtungen in definierter Winkelstellung stehende Fläche handelt. Es bietet sich an, den Messfühler an einer für die aktuelle Messung nicht benötigten Messfläche 10a...10d angreifen zu lassen, da diese ohnehin die erforderliche Bearbeitungspräzision aufweisen. Eine andere Möglichkeit besteht darin, den Kopf 8 der Schraube 7, die den Tastkopf hält, plan auszubilden und den Messfühler dort anzusetzen.

Mit dem erfindungsgemäss vorgeschlagenen Messtaster ist ein In strument geschaffen, welches gestattet, mit einer einzigen Messvorrichtung zwei senkrecht zueinander verlaufende Messrichtungen zu überwachen bzw. deren Lageänderung zu erfassen. So können z.B., ohne den Messaufbau konstruktiv zu verändern, Massabweichungen eines Werkstückes sowohl in horizontaler als auch in vertikaler Richtung erfasst werden. Eine weitere, wichtige Anwendungsmöglichkeit ist darin zu sehen, dass eine Formänderung eines Werkstückes bzw. die genaue Lage derselben mit einer einzigen Messvorrichtung ermittelt werden kann, z.B. der Uebergang des endseitigen, kegligen Teils eines Spiralbohrers in den zylindrischen Bohrerteil.

## Ansprüche

1. Messtaster zur Ermittlung der Dimensionen eines Werkstücks mit Hilfe einer mit dem Messtaster (1) gekoppelten Messvorrichtung, insbesondere zur Bestimmung von zwei im rechten Winkel zueinander stehenden, linearen Dimensionen eines Werkstücks mit derselben Messvorrichtung, dadurch gekennzeichnet, dass der Messtaster (1) durch einen in zwei gegeneinander verschiebbare Bereiche (3, 4) unterteilten, einteiligen Tastkörper (2) gebildet ist, wobei an einem ersten Bereich (3) ein mit dem zu messenden Werkstück in Anlage bringbarer und mit der Messvorrichtung wirkungsverbundener Tastkopf (6) befestigt ist, der durch einen fest mit dem ersten Bereich (3) verbundenen, kubischen Körper gebildet ist, der mindestens zwei freiliegende, untereinander einen Winkel von 90° einschliessende Messflächen (10a - 10d) besitzt, und wobei der zweite Bereich (4) mit Hilfe von elastisch verformbaren, unter einem Winkel von 45° zu den Messflächen (10a - 10d) des Tastkopfs (6) verlaufenden Verbindungsgliedern (11, 12) mit dem genannten ersten Bereich (3) verbunden ist, wobei zur Bildung der verbindungsglieder der einteilige Tastkörper mit Hilfe von im Tastkörper (2) ausgebildeten, unter einem Winkel von 45° zu den Messflächen verlaufenden Schlitzen (13a, 13b, 13c, 14) in die genannten ersten und zweiten Bereiche (3, 4) unterteilt ist.

2. Messtaster zur Ermittlung der Dimensionen eines Werkstücks mit Hilfe einer mit dem Messtaster (1) gekoppelten Messvorrich tung, insbesondere zur Bestimmung von zwei im rechten Winkel zueinander stehenden, linearen Dimensionen eines Werkstücks mit derselben Messvorrichtung, dadurch gekennzeichnet, dass der Messtaster (1) durch einen in zwei gegeneinander verschiebbare Bereiche (3, 4) unterteilten Tastkörper (2) gebildet ist, wobei an einem ersten Bereich (3) ein mit dem zu messenden Werkstück in Anlage bringbarer und mit der Messvorrichtung wirkungsverbundener Tastkopf (6) befestigt ist, der durch einen fest mit dem ersten Bereich (3) verbundenen, kubischen Körper gebildet ist, welcher mindestens zwei freiliegende, untereinander einen Winkel von 90° einschliessende Messflächen (10a - 10d) besitzt, wobei die beiden Bereiche (3, 4) des Tastkörpers (2) durch getrennte Elemente gebildet sind, und wobei der zweite Bereich (4) mit Hilfe von zwei unter einem Winkel von 45° zu den Messflächen (10a - 10d) des Tastkopfs (6) verlaufenden Blattfederelementen mit dem genannten ersten Bereich (3) verbunden ist.

3. Messtaster nach Anspruch 1, dadurch gekennzeichnet, dass mindestens ein Verbindungsglied (11) zwischen den genannten ersten und zweiten Bereichen (3, 4) durch einen schmalen Materialsteg des Tastkörpers (2) gebildet ist, der zwischen zwei der Schlitze (13a, 14), die parallel verlaufen, liegt.

4.  Messtaster nach Anspruch 1, dadurch gekennzeichnet, dass mindestens ein Verbindungsglied (12) zwischen den genannten ersten und zweiten Bereichen (3, 4) durch einen schmalen Materialsteg des Tastkörpers (2) gebildet ist, der zwischen einer un ter einem Winkel von 45° zu den Messflächen (10a 10d) verlaufenden Aussenkante (15) des Tastkörpers (2) und einem der Schlitze (13c), welcher zur Aussenkante (15) parallel verläuf, liegt.

5.  Messtaster nach einem der vorangehenden Ansprüche, dadurch gekennzeichnet, dass die gegenseitige Verschiebebewegung der beiden miteinander verbundenen Bereiche (3, 4) des Tastkörpers (2) begrenzt ist.

## Claims

1.  Measuring calliper for determining dimensions of a workpiece by way of a measuring device, which is coupled to the measuring calliper (1), in particular for determining two linear dimensions of a workpiece, placed at right angles relative to each other, characterised in that the measuring calliper (1) is composed of a one-piece calliper body (2), which is divided into two sections (3, 4) which are displaceable against each other, whereby the first section (3) has attached to it a calliper head (6) for abutment against the workpiece to be measured, which head is effectively connected to the measuring device and is formed by a cubic body, which is fixed to the first section (3) and which has at least two freely disposed measuring surfaces (10a - 10d) including an angle of 90°, and whereby the second section (4) is connected to said first section (3) by way of elastically deformable connecting members (11, 12), which extend at an angle of 45° relative to the measuring surfaces (10a - 10d) of the calliper head, whereby the one-piece calliper body is divided into said first and second sections (3, 4) by way of slots (13a, 13b, l3c, 14) arranged in the calliper body (2) at an angle of 45° relative to the measuring surfaces for the prupose of forming the connecting members.

2.  Measuring calliper for determining dimensions of a workpiece by way of a measuring device, which is coupled to a measuring calliper (1), in particular for determining two linear dimensions of a workpiece, placed at right angles relative to each other, characterized in that the measuring calliper (1) is formed by a calliper body (2), which is divided into two sections (3, 4) which are displaceable against each other, whereby the first section (3) has attached to it a calliper head (6) for abutment against the workpiece to be measured, which head is effectively connected to the measuring device and is formed by a cubic body, which is fixed to the first section (3) and which has at least two freely disposed measuring surfaces (10a - 10d) including an angle of 90°, and whereby the two sections (3, 4) of the calliper body (2) are formed by separate elements, and thereby the second section (4) is connected to the said first section (3) by way of two leaf-spring elements, which extend at an angle of 45° relative to the measuring surfaces (10a - 10d) of the calliper head (6).

3.  Measuring calliper according to claim 1, characterized in that at least one connecting member (11) is formed between said first and second sections (3, 4) by way of a narrow material web of the calliper body (2), disposed between two of the slots, which extend in parallel.

4.  Measuring calliper according to claim 1, characterized in that at least one connecting member (12) is formed between the said first and second sections (3, 4) by a narrow material web of the calliper body (2), which is disposed between an outer edge (15) of the calliper body (2), extending at an angle of 45° relative to the measuring surfaces (10a 10d), and one of the slots (13c), which extends parallel to the outer edge (15).

5.  Measuring calliper according to one of the above claims, characterised in that the displacement movement of the two interconnected calliper head sections (3, 4) is limited.

## Revendications

1.  Palpeur de mesure pour déterminer les dimensions d'une pièce d'usinage au moyen d'un dispositif de mesure connecté au palpeur de mesure (1), en particulier pour déterminer deux dimensions linéaires, à angle droit entre elles, d'une pièce d'usinage au moyen du même dispositif de mesure, caractérisé en ce que le palpeur de mesure (1) est formé d'un corps de palpeur (2) d'une seule pièce, divisé en deux zones (3, 4) pouvant se déplacer l'une par rapport à l'autre, dans lequel une tête de palpeur (6), pouvant être amenée en contact avec la pièce d'usinage à mesurer et agissant conjointement avec le dispositif de mesure, est fixée à une première zone (3), cette tête étant formée d'un corps cubique solidement relié à la première zone (3), et possédant au moins deux surfaces de mesure (10a-10d) dégagées qui forment entre elles un angle de 90°, la deuxième zone (4) étant reliée à ladite première zone (3) au moyen d'éléments de jonction (11,12) élastiquement déformables, orientés selon un angle de 45° par rapport aux surfaces de mesure (10a-10d) de la tête de palpeur (6), le corps de palpeur d'une seule pièce étant divisé, pour former les éléments de jonction, en première et deuxième zones susmentionnées (3, 4) au moyen de fentes (13a, 13b, 13c, 14) réalisées dans le corps de palpeur (2) et orientées selon un angle de 45° par rapport aux surfaces de mesure.

2. Palpeur de mesure pour déterminer les dimensions d'une pièce d'usinage au moyen d'un dispositif de mesure connecté au palpeur de mesure (1), en particulier pour déterminer deux dimensions linéaires, à angle droit entre elles, d'une pièce d'usinage au moyen du même dispositif de mesure, caractérisé en ce que le palpeur de mesure (1) est formé d'un corps de palpeur (2) divisé en deux zones (3, 4) pouvant se déplacer l'une par rapport à l'autre, dans lequel une tête de palpeur (6), pouvant être amenée en contact avec la pièce d'usinage à mesurer et agissant conjointement avec le dispositif de mesure, est fixée à une première zone (3), est formée d'un corps cubique solidement relié à la première zone (3), et possède au moins deux surfaces de mesure (10a-10d) dégagées, formant entre elles un angle de 90°, les deux zones (3, 4) du corps de palpeur (2) étant formés d'éléments séparés et la deuxième zone (4) étant reliée à ladite première zone (3) au moyen de deux éléments à ressorts à lames orientés selon un angle de 45° par rapport aux surfaces de mesure (10a-10d) de la tête de palpeur (6).

3. Palpeur de mesure selon la revendication 1, caractérisé en ce qu'au moins un élément de jonction (11) est formé entre lesdites première et deuxième zones (3, 4) par un étroit montant de matériau du corps de palpeur (2), qui est situé entre deux fentes (13a, 14) qui sont orientées parallèlement entre elles.

4. Palpeur de mesure selon la revendication 1, caractérisé en ce qu'au moins un élément de jonction (12) est formé entre lesdites première et deuxième zones (3, 4) par un étroit montant de matériau du corps de palpeur (2), qui est situé entre un bord extérieur (15) du corps de palpeur (2), formant un angle de 45° avec les surfaces de mesure (10a-10d), et une des fentes (13c) qui est orientée parallèlement au bord extérieur (15).

5. Palpeur de mesure selon l'une des revendications précédentes, caractérisé en ce que le déplacement coulissant mutuel des deux zones (3, 4), reliées entre elles, du corps de palpeur (2) est limité.

FIG. 1

FIG. 2

FIG. 3

FIG. 4

FIG. 5